# EUROPEAN PATENT SPECIFICATION

(11) **EP 2 795 530 B1**
(45) Date of publication and mention of the grant of the patent: **26.02.2020**
(21) Application number: 11877922.2
(22) Date of filing: 19.12.2011
(51) Int. Cl.: G06K 7/00, G06K 7/10

(54) **ENCODED INFORMATION READING TERMINAL USING EXTERNAL TOKEN**
VERSCHLÜSSELTES INFORMATIONSLESEENDGERÄT MIT EXTERNEM TOKEN
TERMINAL DE LECTURE D'INFORMATIONS CODÉES UTILISANT UN JETON EXTERNE

(43) Date of publication of application: 29.10.2014
(73) Proprietor: Hand Held Products, Inc., Fort Mill, SC 29707 (US)
(72) Inventor: CHEN, Feng, Morristown, N.J. 07962-2245 (CN); LIU, Yong, Morristown, N.J. 07962-2245 (CN); TAO, Xi, Morristown, N.J. 07962-2245 (CN); LU, Jun, Morristown, N.J. 07962-2245 (CN)
(74) Representative: Haseltine Lake Kempner LLP
(86) International application number: PCT/CN2011/002120
(87) International publication number: WO 2013/091127

(56) References cited:
- EP-A2- 2 302 561
- CN-A- 101 593 330
- CN-A- 101 924 570
- CN-Y- 200 972 678
- CN-Y- 200 972 678
- US-A1- 2007 084 926
- US-A1- 2008 217 411
- US-A1- 2011 116 424
- US-A1- 2011 116 424
- US-A1- 2011 259 963

## Description

### FIELD OF THE INVENTION

The present invention relates generally to encoded information reading terminals, and in particular to encoded information reading terminals adapted to authenticate the terminal's user.

### BACKGROUND OF THE INVENTION

Encoded information reading (EIR) terminals are widely used in retail stores, shipping facilities, *etc.* A terminal user authentication can be required to prevent an authorized use of the terminal.

United States Patent Application 2007/0084926 which is reflected in the preamble of claim 1 discloses an automatic data collection device for reading barcodes, matrix codes, stacked codes, or other machine-readable symbols.
United States Patent Application 2008/0217411 discloses a method of: reading indicia with a hand held indicia reader having a first wireless transceiver and generating therefrom an encrypted data message; transmitting the encrypted data message from the indicia reader to a base unit having a second wireless transceiver; decrypting the data message within the base; and transmitting the decrypted data message to a host device. The system includes a cryptographic module.
United States Patent Application 2011/0116424 discloses an encoded information reading (EIR) terminal comprising a microprocessor, EIR device and a wireless communication interface. The EIR device can be provided by a bar code reading device, an RFID reading device, and/or a card reading device. The EIR device can be configured to perform outputting raw message data comprising an encoded message and/or outputting decoded message data corresponding to an encoded message.

Chinese Patent CN200972678 provides a device comprising a certificate-granting device, at least one portable electronic device, at least one terminal processing cell and a credit granting management cell. The portable electronic device is connected with the terminal processing
device via an electronic voucher reader or radio-frequency signals. The portable electronic device is thereby used to securely authenticate payments.

### SUMMARY OF THE INVENTION

The present invention in its various aspects is as set out in the appended claims.

There is provided an encoded information reading (EIR) terminal. The EIR terminal comprises a microprocessor, a memory, a communication interface, and an EIR device, all communicatively coupled to a system bus. The EIR device is a bar code reading device, an RFID reading device, and/or a card reading device. The EIR device is configured to output raw message data containing an encoded message and/or output decoded message data corresponding to an encoded message. The EIR terminal is configured, responsive to receiving an identifier from an external token, to ascertain whether said identifier identifies a user allowed to operate said EIR terminal.

### BRIEF DESCRIPTION OF THE DRAWINGS

The objects and features of the invention can be better understood with reference to the claims and drawings described below. The drawings are not necessarily to scale, the emphasis is instead generally being placed upon illustrating the principles of the invention.
Within the drawings, like reference numbers are used to indicate like parts throughout the various views.
Fig. 1 schematically illustrates a network-level layout of one embodiment of a data collection system utilizing EIR terminals;
Fig. 2 schematically illustrates one embodiment of a state machine implemented by the EIR terminal;
Figs. 3a-3c, 4, and 5 schematically illustrate embodiments of the EIR terminal;
Fig. 6 depicts a component-level layout of one embodiment of the EIR terminal;

### DETAILED DESCRIPTION OF THE INVENTION

In one embodiment, there is provided an encoded information reading (EIR) terminal comprising one or more EIR devices, including a bar code reading device, an RFID reading device, and/or a card reading device. The EIR terminal is capable of reading bar codes, RFID tags and/or other encoded message carriers. Encoded messages, for example, UPC bar codes comprising twelve encoded characters representing numerical digits, can be used to convey identification of the source and the model of a product. The EIR terminal is configured, responsive to reading an encoded message by the EIR device, to produce a decoded message string by decoding the encoded message. The EIR terminal comprises a communication interface, which can be provided, e.g., by an Ethernet interface or by IEEE-802.11x-compliant wireless interface. Using the communication interface, one or more software modules being executed by the EIR terminal communicate with external clients and/or servers.

For some applications, it can be necessary to authenticate the user of EIR terminal and prevent unauthorized users from operating the EIR terminal. In one example of prior art, a user can be authenticated via a graphical user interface by being required to enter a user identifier and a password. The EIR terminal can compute a hash of the password provided by the user, and then compare the computed hash value with a stored value of the user's hashed password.

According to the invention a user is authenticated by an authentication token which the user must have in order to operate the EIR terminal. In one embodiment, the authentication token can be provided by a contactless token (*e.g.,* RFID token or NFC token). In another embodiment, the authentication token can be configured to communicate to the EIR terminal via a wired interface (*e.g.,* a USB interface, or a parallel interface).

In another embodiment, a user is required to have an authentication token and to enter a valid user identifier and a password in order to be authenticated.

In a further aspect, an authentication token can have a read-only memory configured to store a unique identifier. In another embodiment, an authentication token can have a user-programmable memory which can be used for storing encrypted data (e.g., a user identifier), thus preventing a malicious party from cloning the authentication token. The EIR terminal can store a key for decrypting the data stored by the authentication token. In one embodiment, asymmetric key cryptography can be used to encrypt the data stored by the authentication token, so that two different keys would be used to decrypt and to encrypt the data, and only one key will need to be stored by the EIR terminal, thus preventing a malicious party having a possession of both an authentication token and an EIR terminal from cloning the authentication token.

In a further aspect, the data stored by an authentication token comprises a user identifier. In one embodiment, the data stored by an authentication token comprises one or more authorization levels authorizing the EIR terminal user to perform various tasks, e.g., scanning, decoding, data transfer to host, terminal maintenance, *etc.*

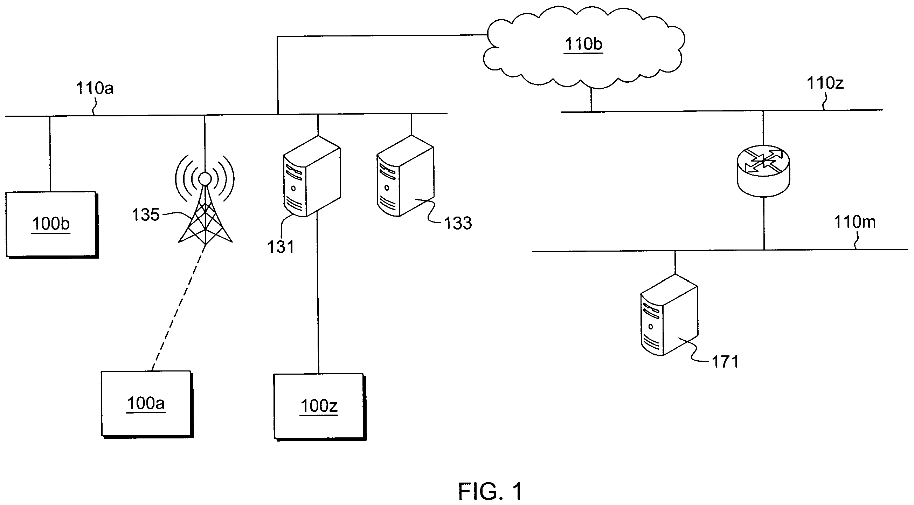

The EIR terminal described herein can be used, for example, for bar code reading and decoding in point-of-sale (POS) and other applications. In one embodiment, EIR terminal 100 can be incorporated into a retail store data collection system 1000 schematically illustrated in Fig. 1, and can be employed at a checkout register for scanning identification tags *(e.g.,* bar code tags) of retail items being purchased by retail customers. Data collection system 1000 includes a plurality of EIR terminals 100a-100z in communication with a plurality of interconnected networks 110a-110z. EIR terminal 100 connects to one or more networks 110a-110z, *e.g*., via a wireless access point 135. In one embodiment, at least one of networks 110a-110z can be provided by an IEEE 802.11x-compliant wireless network. In another embodiment, at least one of networks 110a-110z can be provided by an Ethernet network. In another embodiment, at least one of networks 110a-110z can be provided by a local area network (LAN). In another embodiment, at least one of networks 110a-110z can be provided by a wide area network (WAN). While different networks are designated herein, it is recognized that a single network as seen from the network layer of the OSI model can comprise a plurality of lower layer networks, *i.e.,* what can be regarded as a single Internet Protocol (IP) network, can include a plurality of different physical networks.

In one embodiment, EIR terminal 100 exchanges messages with one or more external computers, including, for example, checkout register 131, retail store server 133, and/or remote server 171. A "computer" herein shall refer to a programmable device for data processing, including a central processing unit (CPU) 310, a memory 320, and at least one communication interface. A computer can be provided, *e.g.*, by a personal computer (PC) running Windows™ operating system. A skilled artisan would appreciate the fact that other hardware platforms and operating systems are within the spirit and the scope of the invention.

In a further aspect, EIR terminal 100 can be communicatively coupled via wired or wireless interface to checkout register 131. EIR terminal 100 can further be in communication with retail store server 133 via wireless access point 135 and network 110a. EIR terminal 100 can further be in communication with remote server 171 via wireless access point 135 and networks 110a, 110b, 110z. A skilled artisan would appreciate the fact that other methods of EIR terminal communicatively coupling to checkout register 131, store server 133, and remote server 171 are within the scope of this disclosure.

One of the messages transmitted by EIR terminal 100 to one or more external computers 131, 133, and/or 171 can include decoded message data corresponding to, *e.g.,* a bar code label or an RFID label attached to a retail item. For example, EIR terminal 100 can transmit to the checkout register 131 a product identifier encoded by a bar code label attached to the product. In another example, EIR terminal 100 can transmit a request to retail store server 133 to retrieve product information corresponding to a product identifier encoded by a bar code label attached to the product.

As noted herein *supra*, the EIR terminal ascertains whether an identifier received from an external token identifies a user allowed to operate said EIR terminal. In one embodiment, the identifier uniquely identifies a user. In another embodiment, the identifier identifies a group of users, and thus two or more tokens can store and transmit the same identifier.

In one embodiment, the EIR terminal comprises an RFID reading device, and the authentication token is provided by an RFID token. In a further aspect, the RFID reading device of the EIR terminal can be compliant with *EPC*™ *Class-1 Generation-2 UHF RFID Protocol for Communications at 860 MHz* - *960 MHz by EPCglobal*, commonly known as the "Gen 2" standard, which defines physical and logical requirements for a passive-backscatter, Interrogator-talks-first (ITF) RFID system operating in the 860 MHz - 960 MHz frequency range.

The EIR terminal can be configured to receive information from an RFID tag by transmitting an unmodulated RF carrier and listening for a backscatter reply. An RFID token can transmit information by backscatter-modulating the amplitude and/or phase of the RFID carrier. The RFID token can encode the backscattered data using, *e.g.,* FM0 baseband or Miller modulation of a subcarrier at the data rate.

Responsive to receiving an interrogation signal transmitted by the EIR terminal 100, an RFID token can transmit a response signal back to the EIR terminal. The response signal can contain useful data, *e.g.,* a token identifier (TID), a user identifier, a group identifier, and/or one or more authorization levels.

In another embodiment, the EIR terminal comprises an NFC reading device, and the authentication token is provided by an NFC token. In a further aspect, the NFC reading device of the EIR terminal can be compliant with *NFC Digital Protocol Technical Specification DIGITAL 1.0 NFCForum-TS-DigitalProtocol-1.0* of 2010-11-17 by NFC Forum™. The EIR terminal is configured to transmit a poll command (*e.g*., ALL REQ or SENS REC) to probe the operating field for NFC devices in Listen Mode. Responsive to receiving a poll command transmitted by the EIR terminal 100, an NFC token transmits a response signal back to the EIR terminal. The response signal contains useful data, *e.g.,* a token identifier (TID), a user identifier, a group identifier, and/or one or more authorization levels.

In another embodiment, the EIR terminal comprises a USB interface, and the authentication token is provided by a USB token. In another embodiment, the EIR terminal comprises a parallel interface, and the authentication token is provided by a parallel interface token.

In a further aspect, the EIR terminal is configured to receive a token identifier, user identifier, and/or a group identifier from an authentication token. In one embodiment, the identifier can be provided by an ASCII string comprising one or more ASCII characters. In another embodiment, the identifier can be provided by a binary string comprising one or more binary bytes. Responsive to receiving a user identifier from the authentication token, the EIR terminal is configured to ascertain whether the received identifier identifies a user allowed to operate the EIR terminal. The EIR terminal can have a data structure stored in the terminal's memory that can contain one or more user identifiers allowed to operate the terminal, or the EIR terminal can have a data structure stored in the terminal's memory that can contain one or more user identifiers and their associated authorization levels to perform various tasks (e.g., scanning, decoding, data transfer, terminal maintenance). Hence, the EIR terminal can ascertain whether the received identifier identifies a user allowed to operate the EIR terminal by looking up the identifier in the data structure stored in the terminal's memory. The data structure can be provided, e.g., by a one-dimensional or multi-dimensional array, a linked list, or a more complex data structure.

In another embodiment, the list of users allowed to operate the EIR terminal and their associated authorization levels is centrally stored by an external computer accessible over a network by one or more EIR terminals. Responsive to receiving a user identifier from the authentication token, an EIR terminal is configured to ascertain whether the received identifier identifies a user allowed to operate the EIR terminal by transmitting an authorization request to the external computer. The external computer responds with an authorization response comprising a flag indicating the user's authorization to operate the EIR terminal and/or a list of authorization levels to perform various tasks corresponding to the user identifier. In a further aspect, the external computer can support, e.g., Light-weight Directory Access Protocol (LDAP) for authorization requests and responses.

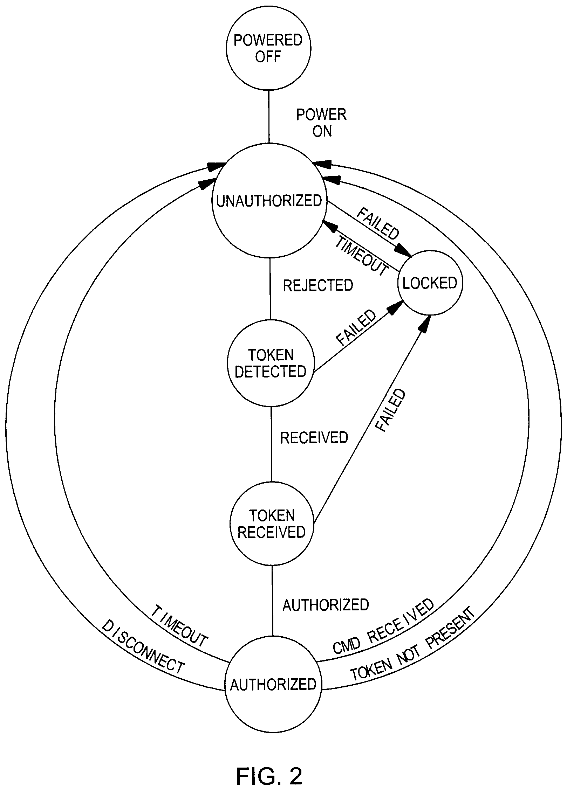

In another aspect, the EIR terminal is configured to communicate with an external token in accordance to a state machine schematically shown in Fig. 2. Responsive to be powered on, the EIR terminal transitions from *Powered Off* state into *Unauthorized* state and initiates communications with the external token in order to receive a user identifier, a group identifier, and/or one or more authorization levels. In one embodiment, the EIR terminal transmits a *Select* command to initiate communication to an RFID token. Responsive to receiving a response from an RFID token, the EIR terminal transmits *Access* and *Read* commands to read the token's *Reserved, EPC, TID* and/or *User* memory. In another embodiment, the EIR terminal transmits a poll command (e.g., ALL REQ or SENS_REC) to probe the operating field for NFC devices in Listen Mode. Responsive to receiving a response from an NFC token, the EIR terminal transmits *Read* command to read the token's memory. In yet another embodiment, the EIR terminal, responsive to detecting an external token attached via a wired interface (e.g., a USB or parallel interface) communicates with the external token via the wired interface.

Responsive to successfully detecting an external token, the EIR terminal transitions to *Token Detected* state and to request and/or receive a user identifier, a group identifier, and/or one or more authorization levels from the external token.

Responsive to failing to receive a user identifier, a group identifier, and/or one or more authorization levels from an external token, the EIR terminal is configured to transition from *Unauthorized* state or *Token Detected* state to *Locked* state. The EIR terminal is further configured to transition to *Unauthorized* state upon expiration of a pre-defined timeout since the terminal's transition to *Locked* state.

Responsive to receiving a user identifier, a group identifier, and/or one or more authorization levels, the EIR terminal transitions from *Token Detected* state to *Identifier Received* state and ascertains the authorization of the user or group identified by the identifier to operate the EIR terminal as described herein *supra.* The EIR terminal is further configured, responsive to failing to receive a confirmation of the user or group authorization to operate the EIR terminal or to execute a requested operation, to transition to *Locked* state.

Responsive to receiving a confirmation of the user or group authorization to operate the EIR terminal or to execute a requested operation, the EIR terminal transitions to *Authorized* state and executes one or more operations requested by the terminal's user. While in *Authorized* state, the EIR terminal is configured to periodically ascertain the presence of the previously detected external token.

In one embodiment, the EIR terminal is further configured to transition to *Unauthorized* state responsive to expiration of a pre-defined timeout. In another embodiment, the EIR terminal is further configured to transition to *Unauthorized* state responsive to detecting a disconnection of an external token connected via a wired interface. In yet another embodiment, the EIR terminal is further configured to transition to *Unauthorized* state responsive to failing to ascertain a presence of a previously detected wireless token. In yet another embodiment, the EIR terminal is further configured to transition to *Unauthorized* state responsive to receiving a user interface command (e.g., a scanning command, a decoding command, a data transfer to host command, or a terminal maintenance command) for which a current authorization level is not sufficient. In yet another embodiment, the EIR terminal is further configured to transition to *Unauthorized* state responsive to reading an encoded information item encoding a command *(e.g.,* a data transfer to host command, or a terminal maintenance command) for which a current authorization level is not sufficient.

In another aspect, the EIR terminal can be configured to track the terminal usage by user/group authenticated by an external token. For each scanning operation the EIR terminal can be configured to store in the terminal's memory and/or to transfer to an external computer the identifier received from the external token and/or data derived from the identifier *(e.g.,* a user's full name corresponding to a user identifier) . For each scanning operation, the EIR terminal can be further configured to store in the terminal's memory and/or to transfer to an external computer the scanned image. For each decoding operation, the EIR terminal can be further configured to store in the terminal's memory and/or to transfer to an external computer the decoded message corresponding to an encoded information item.

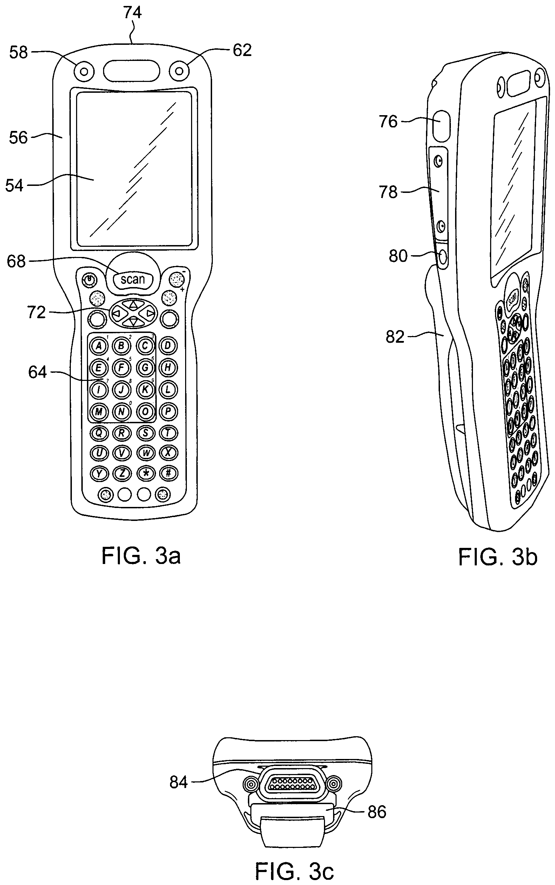

One example of EIR terminal 100 is shown in in Figs. 3a (front panel view), 3b (side panel view), and 3c (bottom panel view). EIR terminal 100 can comprise housing 52 within which other components of EIR terminal 100 can be disposed. LCD screen display with touch screen sensor 54 can be disposed on the front panel 56. Also disposed on front panel 56 can be decode LED 58, scan led 62, and keyboard 64 including scan key 68 and navigation keys 72. Imaging window 74 can be disposed on the top panel of housing 52. Disposed on the side panel (best viewed in Fig. 3b) can be infra-red communication port 76, access door to a secure digital (SD) memory interface 78, audio jack 80, and hand strap 82. Disposed on the bottom panel (best viewed in Fig. 3c) can be multi-pin mechanical connector 84 and hand strap clip 86.

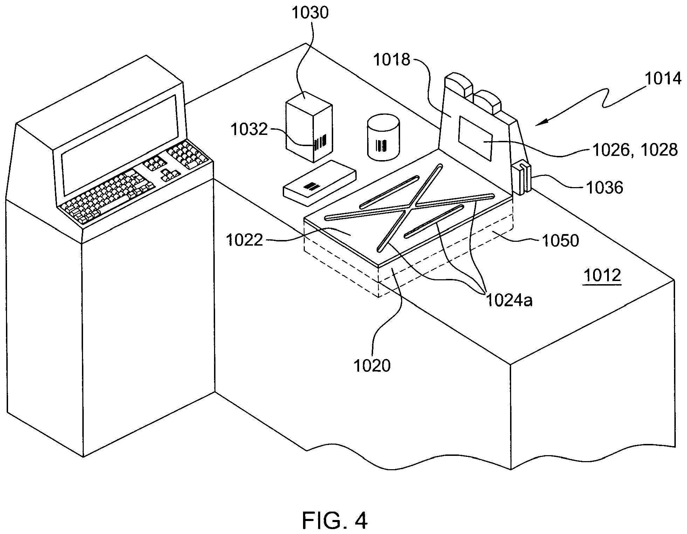

While Figs. 3a-3c illustrate a hand held housing, a skilled artisan would appreciate the fact that other types and form factors of terminal housings are within the scope of this disclosure. For example, in one example schematically shown in Fig. 4, an EIR terminal can be incorporated into a POS workstation with a presentation housing. The workstation 1010 can include a horizontal countertop 1012 for placement of products to be scanned. A bioptic scanner 1014 mounted within the countertop 1012 can include a first housing portion 1016 and a second housing portion 1018 which can project from one end of the first housing portion in a substantially orthogonal manner. In one embodiment, the first housing portion 1016 can comprise a laser-based indicia scanning terminal and the second housing portion 1018 can comprise an imager-based terminal. The countertop 1012 can include an optically transparent *(e.g.,* glass) horizontal-scanning window 1020 mounted flush with the checkout counter, covered by an imaging window protection plate 1022 which can be provided with a pattern of apertures 1024a. The second housing portion 1018 can further include a vertical-scanning window 1026 behind which an imager-based indicia reading terminal 1028 can be housed. A skilled artisan would appreciate the fact that other ways of disposing the scanners and scanning windows are within the scope of this disclosure.

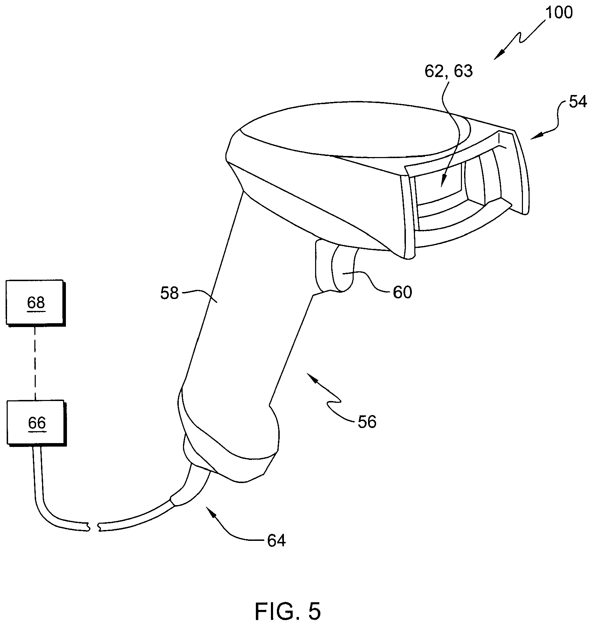

In another example, shown in Fig. 5, there is provided an EIR terminal 100 including a housing 52 comprising a head portion 54 and a handle portion 56, the latter further comprising a hand grip 58 and a trigger 60. The trigger 60 can be used to initiate signals for activating frame readout and/or certain decoding processes. Other components of EIR terminal 100 can be disposed within the housing 52. For example, an image sensor 62 can be disposed in the head portion 54 behind a housing window 63. The image sensor 62 can be configured to output an electrical signal representative of light incident on the image sensor. EIR terminal 100 can further comprise an I/O interface which in the illustrative embodiment of Fig. 5 can be communicatively coupled to a wired connection 66. The I/O interface can be used to communicatively couple EIR terminal 100 to a companion device 68 such as a register and/or peripheral data capture devices in a POS application. Other configurations of the I/O interface may utilize wireless communication technology and/or contact-type features that do not require wires and/or wired connection 66. In certain applications of EIR terminal 100 for example, the companion device 68 may be provided by a docking station with corresponding mating contacts and/or connectors that are useful to exchange power and data, including image data captured by the imaging module 62. Although not incorporated in the illustrative embodiment of Fig. 5, EIR terminal 100 can also comprise a number of peripheral devices, including a display for displaying such information as image frames captured by the terminal, a keyboard, and a pointing device.

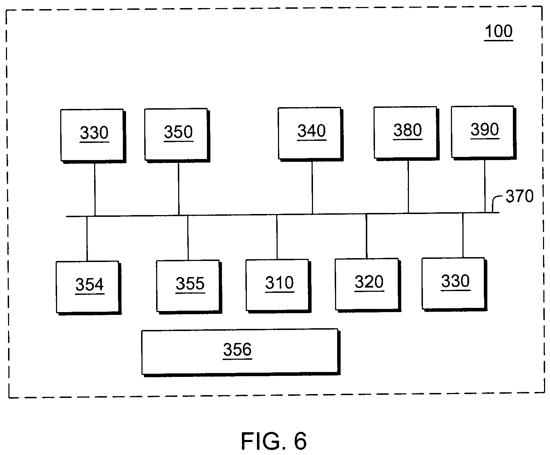

Component-level diagram of one embodiment of an EIR terminal is now being described with references to Fig. 6. EIR terminal 100 comprises at least one microprocessor 310 and a memory 320, both coupled to the system bus 370. The microprocessor 310 is provided by a general purpose microprocessor or by a specialized microprocessor (e.g., an ASIC). In one embodiment, EIR terminal 100 comprises a single microprocessor which can be referred to as a central processing unit (CPU). In another embodiment, EIR terminal 100 comprises two or more microprocessors, for example, a CPU providing some or most of the EIR terminal functionality and a specialized microprocessor performing some specific functionality. A skilled artisan would appreciate the fact that other schemes of processing tasks distribution among two or more microprocessors are within the scope of this disclosure.

EIR terminal 100 further comprises a communication interface 340 communicatively coupled to the system bus 370. In one embodiment, the communication interface is provided by a wireless communication interface. The wireless communication interface is configured to support, for example, but not limited to, the following protocols: at least one protocol of the IEEE 802.11/802.15/802.16 protocol family, at least one protocol of the HSPA/GSM/GPRS/EDGE protocol family, TDMA protocol, UMTS protocol, LTE protocol, and/or at least one protocol of the CDMA/1xEV-DO protocol family.

EIR terminal 100 can further comprise a keyboard interface 354 and a display adapter 355, both also coupled to the system bus 370. EIR terminal 100 can further comprise a battery 356. In one embodiment, the battery 356 can be provided by a replaceable rechargeable battery pack.

EIR terminal 100 can further comprise a GPS receiver 380. EIR terminal 100 can further comprise at least one connector 390 configured to receive a subscriber identity module (SIM) card.

EIR terminal 100 further comprises one or more EIR devices 330, provided, for example, but not limited to, by an RFID reading device, a bar code reading device, or a card reading device. In one embodiment, the RFID terminal is configured to read an encoded message using EIR device 330, and to output raw message data containing the encoded message. In another embodiment, the RFID terminal is configured to read an encoded message using EIR device 330, and to output decoded message data corresponding to the encoded message. As used herein, "message" is intended to denote a character string comprising alphanumeric and/or non-alphanumeric characters. An encoded message can be used to convey information, such as identification of the source and the model of a product, for example, in a UPC code.

Of course, devices that read bar codes, read RFID, or read cards bearing encoded information may read more than one of these categories while remaining within the scope of this disclosure. For example, a device that reads bar codes may include a card reader, and/or RFID reader; a device that reads RFID may also be able to read bar codes and/or cards; and a device that reads cards may be able to also read bar codes and/or RFID. For further clarity, it is not necessary that a device's primary function involve any of these functions in order to be considered such a device; for example, a cellular telephone, smartphone, or PDA that is capable of reading bar codes is a device that read bar codes for purposes of this disclosure.

## Claims

1. An encoded information reading (EIR) terminal (100) comprising:
a microprocessor (310) communicatively coupled to a system bus (370);
a memory (320) communicatively coupled to said system bus (370);
a communication interface (340) coupled to said system bus (370);
an EIR device (330) communicatively coupled to said system bus (370), the EIR device (330) selected from the group consisting of: a bar code reading device, an RFID reading device, an NFC reading device, and a card reading device,
**characterised in that**
said EIR device (330) is configured to obtain an identifier from an external authentication token;
wherein said EIR device (330) is further configured to perform one of: outputting raw message data containing an encoded message, and outputting decoded message data corresponding to an encoded message; and
wherein said EIR terminal (100) is configured, responsive to being powered on, to:
initiate communications with an external authentication token; and
receive an identifier from the external authentication token; and
responsive to receiving the identifier from the external authentication token, to ascertain whether said identifier identifies a user allowed to operate said EIR terminal (100), at least in part by:
transmitting an authorization request to an external computer (131 , 133, 171), the authorization request comprising querying the external computer via said communication interface (340);
receiving an authorization response from the external computer, the authorization response indicating the user's authorization to operate said EIR terminal; and
responsive to receiving the authorization response, to execute one or more operations requested by the user.

2. The EIR terminal (100) of claim 1, wherein said external token is provided by one of: an RFID token, a wired interface token.

3. The EIR terminal (100) of claim 1, wherein said EIR terminal (100) is configured to ascertain whether said identifier identifies a user allowed to operate said EIR terminal (100) by looking up said identifier in a data structure stored in said memory (320).

4. The EIR Terminal (100) of claim 1, wherein said EIR terminal (100) is configured to periodically ascertain the presence of the previously detected external token.

5. The EIR terminal (100) of claim 1, wherein said EIR terminal (100) is further configured to request said identifier responsive to one of: said EIR terminal (100) receiving a user interface command, said EIR terminal (100) detecting a presence of said external token, said EIR terminal (100) reading an encoded information item, and an expiration of a pre-defined timeout.

6. The EIR terminal (100) of claim 1, wherein said EIR terminal (100) is further configured to request said identifier responsive to receiving a user interface command; and wherein said user interface command is provided by one of: a data transfer command, a terminal (100) maintenance command.

7. The EIR terminal (100) of claim 1, wherein said EIR terminal (100) is further configured to request said identifier responsive to said EIR terminal (100) reading an encoded information item; and wherein a decoded message corresponding to said encoded information item comprises one of: a data transfer command, a terminal (100) maintenance command.

8. The EIR terminal (100) of claim 1, wherein said EIR terminal (100) is configured to store in said memory (320) a decoded message corresponding to an encoded information item and one of: said identifier, data derived from said identifier.

9. The EIR terminal (100) of claim 1, wherein said EIR terminal (100) is configured to transmit to an external computer (131 , 133, 171) a decoded message corresponding to an encoded information item and one of: said identifier, data derived from said identifier.

10. The EIR terminal (100) of claim 1, wherein said EIR terminal (100) is configured to transition into an unauthorized state prior to initiating communications with the external authentication token, and responsive to failing to receive the identifier from the external authentication token, to transition to a locked state, the locked state continuing for at least a predefined timeout period.

11. The EIR terminal (100) of claim 1, wherein the external authentication token comprises a contactless token.

12. The EIR terminal (100) of claim 1, wherein the EIR device (330) comprises an RFID reading device, and the external authentication token is provided by an RFID token.

13. The EIR terminal (100) of claim 1, wherein the EIR device (330) comprises a NFC reading device, and the external authentication token is provided by an NFC token.

14. The EIR terminal (100) of claim 1, wherein the EIR terminal (100) is further configured to transition to an unauthorized state responsive to receiving a user interface command for which a current authorization level is not sufficient.

15. The EIR terminal (100) of claim 1, wherein the one or more operations are carried out at least in part using the EIR device (330).

## Patentansprüche

1. Endgerät zum Lesen codierter Informationen (EIR, Encoded Information Reading) (100), umfassend:
einen Mikroprozessor (310), der zu Datenaustauschzwecken mit einem Systembus (370) verbunden ist;
einen Arbeitsspeicher (320), der zu Datenaustauschzwecken mit dem Systembus (370) verbunden ist;
eine Datenaustauschschnittstelle (340), die mit dem Systembus (370) verbunden ist;
eine EIR-Vorrichtung (330), die zu Datenaustauschzwecken mit dem Systembus (370) verbunden ist, wobei die EIR-Vorrichtung (330) ausgewählt ist aus der Gruppe, bestehend aus: einer Barcodelesevorrichtung, einer RFID-Lesevorrichtung, einer NFC-Lesevorrichtung und einer Kartenlesevorrichtung,
**dadurch gekennzeichnet,**
**dass** die EIR-Vorrichtung (330) so eingerichtet ist, dass eine Kennung von einem externen Authentifizierungstoken erhalten wird;
wobei die EIR-Vorrichtung (330) ferner eingerichtet ist zum Ausführen von einem von:
Ausgeben von Rohnachrichtendaten, die eine codierte Nachricht enthalten, und Ausgeben decodierter Nachrichtendaten, die einer codierten Nachricht entsprechen; und
wobei das EIR-Endgerät (100) als Reaktion auf das Einschalten eingerichtet ist zum:
Einleiten von Datenaustausch mit einem externen Authentifizierungstoken; und
Empfangen einer Kennung vom externen Authentifizierungstoken; und
Ermitteln als Reaktion auf das Empfangen der Kennung vom externen Authentifizierungstoken, ob die Kennung einen Benutzer identifiziert, der das EIR-Endgerät (100) bedienen darf, durch mindestens teilweise:
Übertragen einer Berechtigungsanforderung an einen externen Computer (131, 133, 171), wobei die Berechtigungsanforderung das Abfragen des externen Computers über die Datenaustauschschnittstelle (340) umfasst;
Empfangen einer Berechtigungsantwort vom externen Computer, wobei die Berechtigungsantwort die Berechtigung des Benutzers zur Bedienung des EIR-Endgeräts angibt; und
als Reaktion auf das Empfangen der Berechtigungsantwort Ausführen einer oder mehrerer vom Benutzer angeforderter Operationen.

2. EIR-Endgerät (100) nach Anspruch 1, wobei das externe Token bereitgestellt wird durch eines von: einem RFID-Token, einem Token mit drahtgebundener Schnittstelle.

3. EIR-Endgerät (100) nach Anspruch 1, wobei das EIR-Endgerät (100) zum Ermitteln eingerichtet ist, ob die Kennung einen Benutzer identifiziert, der das EIR-Endgerät (100) bedienen darf, indem es die Kennung in einer im Arbeitsspeicher (320) gespeicherten Datenstruktur nachgeschlägt.

4. EIR-Endgerät (100) nach Anspruch 1, wobei das EIR-Endgerät (100) zum periodischen Feststellen des Vorliegens des zuvor erkannten externen Tokens eingerichtet ist.

5. EIR-Endgerät (100) nach Anspruch 1, wobei das EIR-Endgerät (100) zum Anfordern der Kennung als Reaktion auf eines von: einem Empfangen eines Benutzeroberflächenbefehls durch das EIR-Endgerät (100), einem Erkennen eines Vorliegens des externen Tokens durch das EIR-Endgerät (100), einem Lesen eines codierten Informationselements durch das EIR-Endgerät (100) und einem Ablauf einer vordefinierten Zeitüberschreitung eingerichtet ist.

6. EIR-Endgerät (100) nach Anspruch 1, wobei das EIR-Endgerät (100) ferner zum Anfordern der Kennung als Reaktion auf das Empfangen eines Benutzeroberflächenbefehls eingerichtet ist; und wobei der Benutzeroberflächenbefehl bereitgestellt wird durch eines von: einem Datenübertragungsbefehl, einem Wartungsbefehl für das Endgerät (100).

7. EIR-Endgerät (100) nach Anspruch 1, wobei das EIR-Endgerät (100) ferner zum Anfordern der Kennung als Reaktion darauf eingerichtet ist, dass das EIR-Endgerät (100) ein codiertes Informationselement liest; und wobei eine decodierte Nachricht, die dem codierten Informationselement entspricht, eines umfasst von: einem Datenübertragungsbefehl, einem Wartungsbefehl für das Endgerät (100).

8. EIR-Endgerät (100) nach Anspruch 1, wobei das EIR-Endgerät (100) zum Speichern einer decodierten Nachricht im Arbeitsspeicher (320) eingerichtet ist, die einem codierten Informationselement entspricht und einem von: der Kennung, aus der Kennung abgeleiteten Daten.

9. EIR-Endgerät (100) nach Anspruch 1, wobei das EIR-Endgerät (100) zum Übertragen einer decodierten Nachricht an einen externen Computer (131, 133, 171) eingerichtet ist, die einem codierten Informationselement und einem entspricht aus: der Kennung, aus der Kennung abgeleiteten Daten.

10. EIR-Endgerät (100) nach Anspruch 1, wobei das EIR-Endgerät (100) zum Übergehen in einen berechtigungslosen Zustand vor dem Einleiten von Datenaustausch mit dem externen Authentifizierungstoken und als Reaktion auf das Fehlschlagen des Empfangens der Kennung vom externen Authentifizierungstoken zum Übergehen in einen Sperrzustand eingerichtet ist, wobei der Sperrzustand während mindestens einer vordefinierten Zeitspanne andauert.

11. EIR-Endgerät (100) nach Anspruch 1, wobei das externe Authentifizierungstoken ein kontaktloses Token umfasst.

12. EIR-Endgerät (100) nach Anspruch 1, wobei die EIR-Vorrichtung (330) eine RFID-Lesevorrichtung umfasst und das externe Authentifizierungstoken durch ein RFID-Token bereitgestellt wird.

13. EIR-Endgerät (100) nach Anspruch 1, wobei die EIR-Vorrichtung (330) eine NFC-Lesevorrichtung umfasst und das externe Authentifizierungstoken durch ein NFC-Token bereitgestellt wird.

14. EIR-Endgerät (100) nach Anspruch 1, wobei das EIR-Endgerät (100) ferner als Reaktion auf das Empfangen eines Benutzeroberflächenbefehls, für den eine aktuelle Berechtigungsstufe nicht ausreicht, zum Übergehen in einen berechtigungslosen Zustand eingerichtet ist.

15. EIR-Endgerät (100) nach Anspruch 1, wobei die eine oder die mehreren Operationen mindestens teilweise unter Verwendung der EIR-Vorrichtung (330) ausgeführt werden.

## Revendications

1. Terminal de lecture d'informations codées (EIR) (100) comprenant :
un microprocesseur (310), couplé en communication à un bus système (370) ;
une mémoire (320), couplée en communication audit bus système (370) ;
une interface de communication (340), couplée audit bus système (370) ;
un dispositif d'EIR (330), couplé en communication audit bus système (370), le dispositif d'EIR (330) étant sélectionné dans le groupe comprenant : un dispositif de lecture de code à barres, un dispositif de lecture de RFID, un dispositif de lecture de NFC et un dispositif de lecture de carte, **caractérisé en ce que** ledit dispositif d'EIR (330) est configuré pour obtenir un identifiant à partir d'un jeton d'authentification externe ;
dans lequel ledit dispositif d'EIR (330) est en outre configuré pour effectuer l'une des opérations suivantes : sortie de données brutes de message contenant un message codé et sortie de données décodées de message correspondant à un message codé ; et
dans lequel ledit terminal d'EIR (100) est configuré, en réponse à sa mise sous tension, pour :
initier des communications avec un jeton d'authentification externe ; et
recevoir un identifiant à partir du jeton d'authentification externe ; et
en réponse à la réception de l'identifiant à partir du jeton d'authentification externe, pour vérifier si ledit identifiant identifie un utilisateur autorisé à exploiter ledit terminal d'EIR (100), au moins en partie par :
transmission d'une demande d'autorisation à un ordinateur externe (131, 133, 171), la demande d'autorisation comprenant l'interrogation de l'ordinateur externe via ladite interface de communication (340) ;
réception d'une réponse d'autorisation de la part de l'ordinateur externe, la réponse d'autorisation indiquant l'autorisation de l'utilisateur à activer ledit terminal d'EIR ; et
en réponse à la réception de la réponse d'autorisation, pour exécuter au moins une opération demandée par l'utilisateur.

2. Terminal d'EIR (100) selon la revendication 1, dans lequel ledit jeton externe est fourni par : un jeton de RFID ou un jeton d'interface câblée.

3. Terminal d'EIR (100) selon la revendication 1, dans lequel ledit terminal d'EIR (100) est configuré pour vérifier si ledit identifiant identifie un utilisateur autorisé à activer ledit terminal d'EIR (100) en recherchant ledit identifiant dans une structure de données stockée dans ladite mémoire (320).

4. Terminal d'EIR (100) selon la revendication 1, dans lequel ledit terminal d'EIR (100) est configuré pour vérifier périodiquement la présence du jeton externe précédemment détecté.

5. Terminal d'EIR (100) selon la revendication 1, dans lequel ledit terminal d'EIR (100) est en outre configuré pour demander ledit identifiant en réponse à l'une des situations suivantes : la réception d'une instruction d'interface utilisateur par ledit terminal d'EIR (100), la détection d'une présence dudit jeton externe par ledit terminal d'EIR (100), la lecture d'un élément d'information codé par ledit terminal d'EIR (100) ou une expiration d'un délai prédéfini d'expiration.

6. Terminal d'EIR (100) selon la revendication 1, dans lequel ledit terminal d'EIR (100) est en outre configuré pour demander ledit identifiant en réponse à la réception d'une instruction d'interface utilisateur ; et dans lequel ladite instruction d'interface utilisateur est fournie par : une instruction de transfert de données ou une instruction de maintenance de terminal (100).

7. Terminal d'EIR (100) selon la revendication 1, dans lequel ledit terminal d'EIR (100) est en outre configuré pour demander ledit identifiant en réponse à la lecture d'un élément d'information codé par ledit terminal d'EIR (100) ; et dans lequel un message décodé correspondant audit élément d'information codé comprend : une instruction de transfert de données ou une instruction de maintenance de terminal (100).

8. Terminal d'EIR (100) selon la revendication 1, dans lequel ledit terminal d'EIR (100) est configuré pour stocker dans ladite mémoire (320) un message décodé correspondant à un élément d'information codé et : ledit identifiant ou des données dérivées dudit identifiant.

9. Terminal d'EIR (100) selon la revendication 1, dans lequel ledit terminal d'EIR (100) est configuré pour transmettre à un ordinateur externe (131, 133, 171) un message décodé correspondant à un élément d'information codé et : ledit identifiant ou des données dérivées dudit identifiant.

10. Terminal d'EIR (100) selon la revendication 1, dans lequel ledit terminal d'EIR (100) est configuré pour passer à un état non autorisé avant de démarrer des communications avec le jeton d'authentification externe et, en réponse à l'échec de la réception de l'identifiant à partir du jeton d'authentification externe, passer à un état verrouillé, l'état verrouillé se poursuivant pendant au moins une période prédéfinie d'expiration.

11. Terminal d'EIR (100) selon la revendication 1, dans lequel le jeton d'authentification externe comprend un jeton sans contact.

12. Terminal d'EIR (100) selon la revendication 1, dans lequel le dispositif d'EIR (330) comprend un dispositif de lecture de RFID et le jeton d'authentification externe est fourni par un jeton de RFID.

13. Terminal d'EIR (100) selon la revendication 1, dans lequel le dispositif d'EIR (330) comprend un dispositif de lecture de NFC et le jeton d'authentification externe est fourni par un jeton de NFC.

14. Terminal d'EIR (100) selon la revendication 1, dans lequel le terminal d'EIR (100) est en outre configuré pour passer à un état non autorisé en réponse à la réception d'une instruction d'interface utilisateur pour laquelle un niveau d'autorisation actuel n'est pas suffisant.

15. Terminal d'EIR (100) selon la revendication 1, dans lequel l'au moins une opération est effectuée au moins en partie à l'aide du dispositif d'EIR (330).
